# EUROPÄISCHE PATENTSCHRIFT

(11) **EP 3 560 686 B1**
(45) Veröffentlichungstag und Bekanntmachung des Hinweises auf die Patenterteilung: **29.06.2022**
(21) Anmeldenummer: 19166437.4
(22) Anmeldetag: 01.04.2019
(51) Int. Cl.: B29C 64/153, B29C 64/268, B33Y 30/00, B29C 64/282, B22F 10/20, B22F 12/00, B22F 3/105

(54) **BEARBEITUNGSMASCHINE ZUM SCHICHTWEISEN HERSTELLEN VON DREIDIMENSIONALEN BAUTEILEN**
PROCESSING MACHINE FOR THE LAYERED PRODUCTION OF THREE-DIMENSIONAL COMPONENTS
MACHINE D'USINAGE PERMETTANT LA FABRICATION PAR COUCHES DE COMPOSANTS TRIDIMENSIONNELS

(30) Priorität: 27.04.2018 DE 102018206552
(43) Veröffentlichungstag der Anmeldung: 30.10.2019
(73) Patentinhaber: Trumpf Laser- und Systemtechnik GmbH, 71254 Ditzingen (DE)
(72) Erfinder: Allenberg-Rabe, Matthias, 70499 Stuttgart (DE)
(74) Vertreter: Kohler Schmid Möbus Patentanwälte

(56) Entgegenhaltungen:
- EP-A2- 2 926 925
- US-B1- 6 184 490

## Beschreibung

Die vorliegende Erfindung betrifft eine Bearbeitungsmaschine zum schichtweisen Herstellen von dreidimensionalen Bauteilen durch Bestrahlen eines Pulverbetts, umfassend: eine Prozesskammer mit einer Trägerplatte zur Aufbringung des Pulverbetts sowie eine Bestrahlungseinrichtung mit mindestens drei Scannereinrichtungen, die jeweils zur zweidimensionalen Ablenkung eines Laserstrahls auf einen von drei sich überlappenden Pulverbettbereichen des Pulverbetts ausgebildet sind.

In Bearbeitungsmaschinen zur schichtweisen additiven Fertigung von dreidimensionalen Bauteilen werden Materialien verarbeitet, indem in einer Prozesskammer Pulverschichten (Metall, Keramik, Thermoplaste) eines Pulverbetts auf eine Trägerplatte (auch Substrat genannt) aufgebracht und mit mindestens einem (fokussierten) Laserstrahl bestrahlt und hierbei selektiv verfestigt werden. Wird eine jeweilige Pulverschicht vom Laserstrahl aufgeschmolzen, spricht man von Laser Metal Fusion (LMF) oder Selective Laser Melting (SLM). Wird die Pulverschicht mit dem Laserstrahl nur gesintert, spricht man von Selective Laser Sintering (SLS). Nach dem Bestrahlen einer Pulverschicht wird die Trägerplatte abgesenkt und eine neue Pulverschicht wird aufgebracht und erneut lokal verfestigt, bis ein dreidimensionales Bauteil hergestellt ist.

Eine zur zweidimensionalen Ablenkung des Laserstrahls verwendete Scannereinrichtung einer solchen Bearbeitungsmaschine ist technisch umso aufwändiger, je größer der bei der zweidimensionalen Ablenkung des Laserstrahls zu überdeckende Winkelbereich und somit der mit dem Laserstrahl bestrahlte Pulverbettbereich ist. Es kann daher sinnvoll sein, mehrere Scannereinrichtungen zur Bestrahlung mehrerer nicht überlappender Pulverbettbereiche einzusetzen, um die bearbeitbare Fläche des Pulverbetts zu vergrößern.

In der DE 10 2005 14 483 A1 wird eine Vorrichtung zur Herstellung von Gegenständen beschrieben, bei der eine Bestrahlungseinrichtung eingesetzt wird, die mehrere steuerbare Subsysteme mit wenigstens einer Laserstrahlungsquelle und jeweils einer Zieleinrichtung für die Laserstrahlungsquelle aufweist, wobei die Zieleinrichtung eine Scannereinrichtung umfassen kann. Die jeweiligen Subsysteme der Bestrahlungseinrichtung sind jeweiligen Abschnitten eines Baufeldes auf einer Trägeranordnung zugeordnet, so dass mehrere Subsysteme zur simultanen Bestrahlung in den Abschnitten des Baufeldes einsetzbar sind.

Der Prozess des Aufschmelzens bzw. des Sinterns des Materials der Pulverschichten ist vergleichsweise langwierig, so dass eine Verringerung der Belichtungs- bzw. Bestrahlungszeit wünschenswert ist. Um die Belichtungszeit unabhängig von der Form des herzustellenden Bauteils zu verkürzen, kann ein paralleles Bestrahlen von zumindest teilweise überlappenden Pulverbereichen des Pulverbetts mit Hilfe von mehreren Scannereinrichtungen bzw. mit Hilfe von mehreren Laserquellen durchgeführt werden. Es hat sich als besonders günstig erwiesen, wenn die bestrahlten Pulverbettbereiche sich gegenseitig möglichst vollständig überlappen, so dass jede Scannereinrichtung jeden Ort des Pulverbetts in der Bearbeitungsebene adressieren kann.

In der DE 10 2013 103 006 A1 ist eine Vorrichtung zur schichtweisen additiven Fertigung eines Gegenstands beschrieben, die einen Träger zur Aufnahme von Material in einem planaren Feld sowie wenigstens zwei jeweilige Scanner für wenigstens zwei Laserstrahlen umfasst. Das gesamte planare Feld ist jedem der beiden Scanner gemein. Wenigstens ein Scanner ist bezüglich des planaren Feldes geneigt und mit einer Linse versehen, die so angeordnet ist, dass sie eine Brennebene erzeugt, die bezüglich dieses Scanners geneigt ist. Aufgrund der geneigten Anordnung der Brennebene ist die Kalibrierung einer solchen Vorrichtung aufwändig.

Um Probleme bei der Kalibrierung zu vermeiden, können zwei oder mehr Scannereinrichtungen, deren Brennebenen typischerweise parallel zur Trägerplatte bzw. zur Bearbeitungsebene ausgerichtet sind, in einem möglichst geringen Abstand zueinander ungefähr in der Mitte über dem Pulverbett angeordnet werden. Beispielsweise können drei Scannereinrichtungen an den Eckpunkten eines regelmäßigen Dreiecks oberhalb der Mitte des Pulverbetts angeordnet sein, wie dies in der DE 10 2016 222 261.6 beschrieben ist. Bei einer solchen Anordnung der Scannereinrichtungen liegt einerseits ein großer Überlapp der bestrahlten Pulverbettbereiche vor und andererseits sind die Winkelbereiche, die von einer jeweiligen Scannereinrichtung außerhalb des Pulverbetts abgedeckt werden, gering.

Die Fa. Renishaw wirbt auf der Website "http://www.renishaw.com/en/pioneeringproductivity-in-additive-manufacturing--43150" mit einer Bearbeitungsmaschine zur Herstellung von dreidimensionalen Bauteilen, bei der vier Paare von digital gesteuerten Spiegeln in einer rechteckigen Anordnung in einem gemeinsamen Galvanometer-Gehäuse untergebracht sind, das durch additive Fertigung erzeugt wurde.

DE 10 2014 005 916 A1 offenbart eine Vorrichtung zur Herstellung von dreidimensionalen Objekten, die mindestens vier Scanner aufweist, die derart angeordnet und verfahrbar sind, dass jede Stelle des Baufeldes mit der Strahlung aus wenigstens drei Scannern gleichzeitig beleuchtbar ist. Die Scanner können einzeln, gemeinsam, paarweise oder in Gruppen höhenvariabel, insbesondere in Z-Richtung verfahrbar angeordnet sein.

In der US 2016/0136730 A1 ist eine Vorrichtung zur additiven Fertigung beschrieben, die eine optische Einrichtung mit einer Mehrzahl von unabhängig voneinander steuerbaren optischen Elementen bzw. Anordnungen aufweist. In einem Beispiel weist die optische Einrichtung eine Mehrzahl von in vertikaler Richtung übereinander angeordneten optischen Anordnungen mit jeweils einem an einem Schaft befestigten Spiegel auf. Die optischen Anordnungen sind in zwei zueinander versetzten Zeilen angeordnet.

Weitere Vorrichtungen zur additiven Fertigung sind aus EP2926925A2 und US6184490B1 bekannt.

### Aufgabe der Erfindung

Der Erfindung liegt die Aufgabe zugrunde, eine Bearbeitungsmaschine mit einer möglichst kompakten geometrischen Anordnung von mindestens drei Scannereinrichtungen bereitzustellen.

### Gegenstand der Erfindung

Diese Aufgabe wird erfindungsgemäß durch eine Bearbeitungsmaschine gemäss Anspruch 1 gelöst, bei der die erste und bevorzugt die zweite Scannereinrichtung in einem ersten (konstanten bzw. festen) Abstand zu einer Bearbeitungsebene der Bearbeitungsmaschine, insbesondere in einer gemeinsamen Ebene, angeordnet sind und bei der die dritte Scannereinrichtung in einem zweiten, vom ersten verschiedenen (konstanten bzw. festen) Abstand zu der Bearbeitungsebene angeordnet ist. Die dritte Scannereinrichtung ist somit in einem (konstanten bzw. festen) (Arbeits-)Abstand von der Trägerplatte bzw. von der Bearbeitungsebene an der Oberseite des Pulverbetts angeordnet, der sich vom (konstanten bzw. festen) (Arbeits-)Abstand der ersten und typischerweise auch der zweiten Scannereinrichtung zu der Trägerplatte bzw. zu der Bearbeitungsebene unterscheidet. Typischerweise sind die erste und die zweite Scannereinrichtung in einer gemeinsamen Ebene, d.h. in demselben (ersten) Abstand zu der Bearbeitungsebene angeordnet. Die dritte Scannereinrichtung kann weiter entfernt von der Bearbeitungsebene angeordnet sein als die erste und die zweite Scannereinrichtung, es ist aber auch der umgekehrte Fall möglich. Gegebenenfalls können auch alle drei Scannereinrichtungen in unterschiedlichen (konstanten bzw. festen) Abständen zu der Bearbeitungsebene angeordnet sein. Die Scannereinrichtungen sind ortsfest in der Bearbeitungsmaschine angeordnet, d.h. die Position der Scannereinrichtungen und insbesondere deren Abstand von der Bearbeitungsebene kann nicht verändert werden.

Durch die Wahl unterschiedlicher Abstände kann eine kompaktere Anordnung der drei Scannereinrichtungen, genauer gesagt der drei aus diesen austretenden Laserstrahlen, realisiert werden als dies bei der Anordnung der drei Scannereinrichtungen in einer gemeinsamen Ebene der Fall wäre, da eine Kollision von Bauteilen der Scannereinrichtungen, z.B. von Drehantrieben für die Scannerspiegel der Scannereinrichtungen, mit dem Strahlengang der Laserstrahlen vermieden werden kann. Die drei Laserstrahlen, die aus den Scannereinrichtungen austreten und die auf das Pulverbett ausgerichtet werden, sind hierbei idealerweise an den Eckpunkten eines gleichseitigen Dreiecks angeordnet. Der Abstand zwischen den Eckpunkten des Dreiecks kann durch die weiter oben beschriebene Festlegung unterschiedlicher Abstände reduziert werden, wodurch die Packungsdichte bzw. die Kompaktheit der Anordnung der drei Scannereinrichtungen zunimmt.

Bei einer Ausführungsform weisen die drei Scannereinrichtungen zur zweidimensionalen Ablenkung der drei Laserstrahlen jeweils einen ersten Scannerspiegel mit einem ersten Drehantrieb zur Drehung des ersten Scannerspiegels um eine erste Drehachse und einen zweiten Drehantrieb zur Drehung eines zweiten Scannerspiegels um eine zweite Drehachse auf. Die Scannereinrichtung kann ausgebildet sein, ein- und denselben Scannerspiegel mit Hilfe von zwei Drehantrieben um zwei Drehachsen zu drehen, wie dies in der Regel bei einer MEMS(Mikro-elektro-mechanischen)-Scannereinrichtung der Fall ist. Nachfolgend wird der Fall beschrieben, bei dem eine jeweilige Scannereinrichtung zwei Scannerspiegel aufweist. Es versteht sich aber, dass die nachfolgenden Ausführungen in der Regel entsprechend auch für den ersten Fall gelten.

Ein auf den jeweiligen ersten Scannerspiegel auftreffender Laserstrahl wird von dem ersten Scannerspiegel zu dem zweiten Scannerspiegel umgelenkt, von dem der Laserstrahl in Richtung auf das Pulverbett bzw. auf die Bearbeitungsebene ausgerichtet wird, die parallel zur Trägerplatte verläuft. Die Drehachse eines jeweiligen zweiten Scannerspiegels verläuft in der Regel parallel zur Bearbeitungsebene der Bearbeitungsmaschine bzw. zur Trägerplatte. Die Drehachsen des ersten und des zweiten Scannerspiegels können senkrecht zueinander ausgerichtet sein, es ist in der Regel aber günstig, wenn der Winkel, den die Drehachse des jeweiligen ersten und des zweiten Scannerspiegels einer jeweiligen Scannereinrichtung miteinander einschließen, geringfügig von 90° abweicht. Eine solche Verkippung der Drehachsen von zwei 2D-Galvanometer-Scannerspiegeln dient vor allem dazu, den zweiten Scannerspiegel aufgrund des steileren Einfallswinkels des Laserstrahls etwas schmaler ausgestalten zu können als dies bei einer Ausrichtung der Drehachsen unter einem Winkel von 90° der Fall ist. Auf diese Weise kann das Trägheitsmoment der Scannereinrichtung reduziert werden und das Gesamtsystem dynamischer gemacht werden.

Die Drehantriebe erstrecken sich insbesondere bei Galvanometer-Scannern entlang der jeweiligen Drehachse des ersten bzw. des zweiten Scannerspiegels und weisen eine im Wesentlichen zylindrische Geometrie auf, wobei die Zylinderachse der Drehantriebe mit der Drehachse übereinstimmt. Um bei der Verwendung von zwei Scannereinrichtungen eine möglichst große Packungsdichte zu erzeugen, d.h. um zu erreichen, dass die beiden Laserstrahlen in einem möglichst kleinen Abstand aus der Bestrahlungseinrichtung austreten, ist es günstig, die Drehantriebe und somit auch die beiden Drehachsen der zweiten Scannerspiegel parallel zueinander auszurichten, und zwar typischerweise in einer gemeinsamen Ebene parallel zur Bearbeitungsebene. Hierbei können insbesondere die erste und die zweite Scannereinrichtung bzw. deren Scannerspiegel spiegelsymmetrisch zu einer Ebene angeordnet sein, die senkrecht zur Bearbeitungsebene und parallel zu den beiden zweiten Drehachsen verläuft.

Bei einer weiteren Ausführungsform überlappen sich der der ersten Scannereinrichtung zugeführte erste Laserstrahl oder der der zweiten Scannereinrichtung zugeführte zweite Laserstrahl und mindestens einer der beiden Drehantriebe der dritten Scannereinrichtung in der Projektion in die Bearbeitungsebene. Trotz der Überlappung in der Projektion in die Bearbeitungsebene kann durch die Wahl unterschiedlicher Abstände der Scannereinrichtungen von der Bearbeitungsebene eine Kollision vermieden werden, da die Laserstrahlen der ersten bzw. der zweiten Scannereinrichtung unter bzw. über den Drehantrieben der dritten Scannereinrichtung propagieren. Die dritte Scannereinrichtung, genauer gesagt der aus dieser austretende dritte Laserstrahl, kann daher mittig zwischen den beiden aus der ersten Scannereinrichtung und der zweiten Scannereinrichtung austretenden ersten und zweiten Laserstrahlen aus der Bestrahlungseinrichtung austreten. Die drei Laserstrahlen können insbesondere an den drei Eckpunkten eines gleichseitigen Dreiecks aus der Bestrahlungseinrichtung austreten, welches eine minimale Kantenlänge aufweist.

Bei einer Weiterbildung sind die Drehachse des zweiten Scannerspiegels der ersten Scannereinrichtung und die Drehachse des zweiten Scannerspiegels der zweiten Scannereinrichtung parallel zueinander ausgerichtet, wobei bevorzugt die Drehachse des zweiten Scannerspiegels der dritten Scannereinrichtung senkrecht zu den Drehachsen der zweiten Scannerspiegel der ersten und der zweiten Scannereinrichtung ausgerichtet ist. Wie weiter oben beschrieben wurde, würde bei der Anordnung aller drei Scannereinrichtungen in einer gemeinsamen Ebene bei dieser Ausführungsform der Drehantrieb des zweiten Scannerspiegels der dritten Scannereinrichtung, der entlang der zweiten Drehachse verläuft, mit dem Strahlengang des ersten Laserstrahls oder des zweiten Laserstrahls überlappen.

Bei einer Weiterbildung weist die Bestrahlungseinrichtung eine erste Strahlzuführungseinrichtung zur Zuführung des ersten Laserstrahls zu der ersten Scannereinrichtung und eine zweite Strahlzuführungseinrichtung zur Zuführung des zweiten Laserstrahls zu der zweiten Scannereinrichtung auf, wobei die beiden Strahlzuführungseinrichtungen bevorzugt ausgebildet sind, der ersten und zweiten Scannereinrichtung den ersten und zweiten Laserstrahl parallel ausgerichtet zuzuführen. Die Strahlzuführungseinrichtungen dienen typischerweise der Zuführung eines jeweiligen Laserstrahls von einer zugeordneten Laserquelle zu der jeweiligen Scannereinrichtung. Die drei Laserstrahlen werden typischerweise von drei Laserquellen erzeugt, die in der Regel vom gleichen Typ sind.

Die Strahlzuführungseinrichtungen können beispielsweise röhrenförmig ausgebildet sein und Öffnungen aufweisen, die in einem Gehäuse der Bestrahlungseinrichtung gebildet sind, in dem die Scannerspiegel der drei Scannereinrichtungen angeordnet sind. Der erste Laserstrahl wird der ersten Scannereinrichtung bevorzugt parallel zur Drehachse des zweiten Scannerspiegels der ersten Scannereinrichtung zugeführt. Entsprechend wird auch der zweite Laserstrahl der zweiten Scannereinrichtung bevorzugt parallel zur Drehachse des zweiten Scannerspiegels der zweiten Scannereinrichtung zugeführt. Die Zuführung des ersten und zweiten Laserstrahls erfolgt hierbei bevorzugt von einer den Drehantrieben des jeweiligen zweiten Scannerspiegels entgegengesetzten Seite, d.h. die beiden Laserstrahlen verlaufen nicht entlang der räumlichen Erstreckung der beiden Drehantriebe entlang der zweiten Drehachse. Dies ist günstig, da es ansonsten zu einer Kollision zwischen den Laserstrahlen und radial nach außen überstehenden Bauteilen eines jeweiligen Drehantriebs bzw. Motors, beispielsweise Encodern oder dergleichen, kommen kann.

Bei einer Weiterbildung weist die Bestrahlungseinrichtung eine dritte Strahlzuführungseinrichtung zur Zuführung des dritten Laserstrahls zu der dritten Scannereinrichtung auf, die bevorzugt ausgebildet ist, der dritten Scannereinrichtung den dritten Laserstrahl senkrecht zum ersten und zweiten Laserstrahl ausgerichtet zuzuführen. Die dritte Strahlzuführungseinrichtung führt der dritten Scannereinrichtung den dritten Laserstrahl bevorzugt parallel zur Drehachse des zweiten Scannerspiegels der dritten Scannereinrichtung zu. Wie bei der ersten und der zweiten Strahlzuführungseinrichtung erfolgt auch die Zuführung des dritten Laserstrahls bevorzugt von einer dem Drehantrieb des zweiten Scannerspiegels der dritten Strahlzuführungseinrichtung entgegengesetzten Seite, d.h. der dritte Laserstrahl verläuft nicht entlang der räumlichen Erstreckung des zweiten Drehantriebes entlang der zweiten Drehachse.

Bei einer weiteren Ausführungsform weisen die erste und die zweite Strahlzuführungseinrichtung eine erste Fokussiereinrichtung und eine zweite Fokussiereinrichtung und die dritte Strahlzuführungseinrichtung weist eine dritte Fokussiereinrichtung zur Fokussierung eines jeweiligen Laserstrahls in die Bearbeitungsebene auf. Durch den Versatz der dritten Scannereinrichtung relativ zur ersten und zweiten Scannereinrichtung weist diese einen Abstand zu der Oberseite des Pulverbetts bzw. zur Bearbeitungsebene auf, der sich vom Abstand der ersten und zweiten Scannereinrichtung von der Bearbeitungsebene unterscheidet. Es ist günstig, bei der Fokussierung den unterschiedlichen Strahlweg des dritten Laserstrahls im Vergleich zum ersten und zweiten Laserstrahl auszugleichen, um identische Abbildungsverhältnisse und denselben Fokusdurchmesser aller drei Laserstrahlen auf dem Pulverbett zu erzeugen, d.h. der (optische) Abstand der drei Fokussiereinrichtungen zum Pulverbett bzw. zur Bearbeitungsebene ist jeweils gleich groß.

Bei den drei Fokussiereinrichtungen handelt es sich im einfachsten Fall um drei Fokussierlinsen von identischer Bauart bzw. mit identischer Brennweite. Die dritte Fokussierlinse ist hierbei typischerweise in einem Abstand vor den Scannerspiegeln der dritten Fokussiereinrichtung angeordnet, der sich vom Abstand der ersten und der zweiten Fokussierlinse von den jeweiligen Scannerspiegeln der ersten und der zweiten Scannereinrichtung unterscheidet. Die Abstandsdifferenz ist so gewählt, dass diese den Betrag des Versatzes der dritten Scannereinrichtung zur ersten und zur zweiten Scannereinrichtung ausgleicht. Ist dies der Fall, verringert/vergrößert sich die räumliche Auflösung der dritten Scannereinrichtung lediglich geringfügig (weniger als 10 %). Da die Winkel- und damit auch die Positionsauflösung moderner Drehantriebe in Form von Galvano-Motoren sehr hoch ist, ist eine Veränderung der Auflösung in dieser Größenordnung praktisch vernachlässigbar. Es versteht sich, dass alternativ oder zusätzlich zur Wahl eines unterschiedlichen Abstandes der Fokussierlinsen auch die Brennweiten der Fokussierlinsen unterschiedlich gewählt werden können. Die Wahl von unterschiedlichen Brennweiten führt allerdings zu einem unterschiedlichen Abbildungsverhältnis und damit zu einem unterschiedlichen Fokusdurchmesser der drei Laserstrahlen in der Bearbeitungsebene.

Zusätzlich zu den Fokussiereinrichtungen können die Strahlzuführungseinrichtungen auch eine oder mehrere Fokuslagen-Korrektureinrichtungen aufweisen, die eine dynamische Korrektur der Fokuslage ermöglichen. Eine solche Korrektur ist typischerweise erforderlich, da die Fokusposition des jeweiligen Laserstrahls bei der Umlenkung mit Hilfe der Scannerspiegel (ohne die Verwendung eines F/Theta-Objektivs) auf einer Kugeloberfläche und somit nicht exakt an der Oberseite des Pulverbetts bzw. der Bearbeitungsebene liegt. Um die Variation der Fokuslage (senkrecht zur Bearbeitungsebene bzw. zum Pulverbett) über einen jeweiligen Pulverbettbereich zu kompensieren, kann eine Fokuslagen-Korrektur vorgenommen werden, bei der die sphärische Abweichung beispielsweise durch schnelle Ausgleichs-Bewegungen einer Fokussierlinse in Strahlrichtung des jeweiligen Laserstrahls korrigiert wird, was eine schnelle Fokuslagenverschiebung zur Folge hat. Die bewegbare bzw. verschiebbare Linse kann in die weiter oben beschriebene Fokussiereinrichtung integriert sein.

Bei einer weiteren Ausführungsform umfasst die Bestrahlungseinrichtung ein Gehäuse, welches eine gemeinsame Austrittsöffnung zum Austritt der drei Laserstrahlen der drei Scannereinrichtungen in Richtung auf die Bearbeitungsebene aufweist. Wie weiter oben beschrieben wurde, bilden die drei aus dem Gehäuse austretenden Laserstrahlen in der Projektion in die Bearbeitungsebene bevorzugt drei Eckpunkte eines gleichseitigen Dreiecks.

Weitere Vorteile der Offenbarung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Offenbarung.

Es zeigen:
- Fig. 1: eine schematische Darstellung eines Ausführungsbeispiels einer Bearbeitungsmaschine zur schichtweisen Herstellung von dreidimensionalen Bauteilen,
- Fig. 2: eine Schnittansicht durch die in Fig. 1 gezeigte Bearbeitungsmaschine gemäß II-II in Fig. 1,
- Fig. 3a: eine Darstellung von drei Scannereinrichtungen, die in einer gemeinsamen Ebene angeordnet sind,
- Fig. 3b: eine Darstellung der drei Scannereinrichtungen von Fig. 3a, bei der die dritte Scannereinrichtung zur der ersten und zweiten Scannereinrichtung versetzt angeordnet ist,
- Fig. 4: eine Darstellung eines Gehäuses einer Bestrahlungseinrichtung mit den drei Scannereinrichtungen von Fig. 3b von der Unterseite,
- Fig. 5: eine Darstellung der Bestrahlungseinrichtung von Fig. 4 in einer Seitenansicht,
- Fig. 6a,b: eine Draufsicht und eine Seitenansicht von drei Scannereinrichtungen mit jeweils einem einzigen Scannerspiegel, die in einer gemeinsamen Ebene angeordnet sind, sowie
- Fig. 7a,b: eine Draufsicht und eine Seitenansicht der drei Scannereinrichtungen von Fig. 6a,b, wobei die dritte Scannereinrichtung zur ersten und zweiten Scannereinrichtung versetzt angeordnet ist.

In der folgenden Beschreibung der Zeichnungen werden für gleiche bzw. funktionsgleiche Bauteile identische Bezugszeichen verwendet.

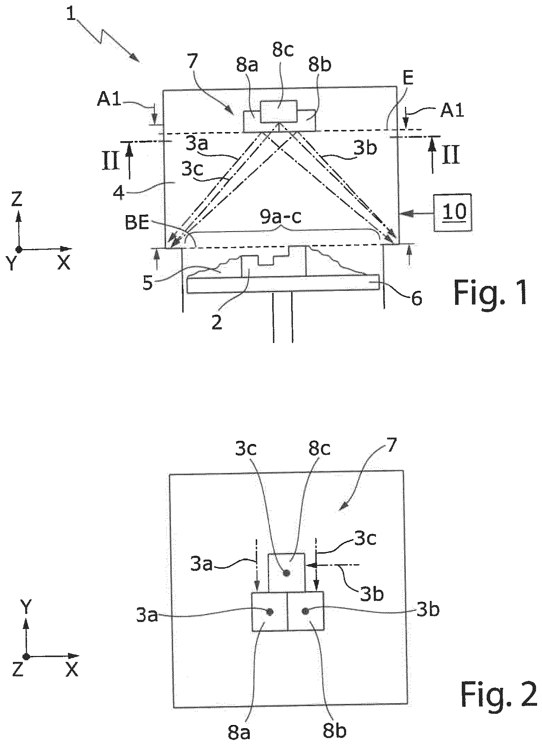

**Fig. 1** zeigt einen beispielhaften Aufbau einer Bearbeitungsmaschine **1** zur schichtweisen additiven Fertigung von dreidimensionalen Bauteilen **2** mit Hilfe von drei Laserstrahlen **3a-c.** Die Bearbeitungsmaschine 1 umfasst eine Prozesskammer **4,** in der ein Pulverbett **5** (Metall, Keramik, Thermoplaste) auf eine Trägerplatte **6** aufgebracht ist. Das Pulverbett 5, genauer gesagt eine jeweilige Pulverschicht des Pulverbetts 5, wird mit den drei Laserstrahlen 3a-c selektiv aufgeschmolzen und nachfolgend verfestigt, um eine Schicht des dreidimensionalen Bauteils 2 zu erzeugen. Nachfolgend wird die Trägerplatte 6 abgesenkt und eine neue Pulverschicht aufgebracht und erneut verfestigt, bis das dreidimensionale Bauteil 2 vollständig hergestellt wurde.

Oberhalb des Pulverbetts 5 ist eine Bestrahlungseinrichtung **7** angebracht, die drei Scannereinrichtungen **8a-c** zum zweidimensionalen Ablenken jeweils eines von drei Laserstrahlen 3a-c auf einen jeweiligen Pulverbettbereich **9a-c** aufweist, wobei die drei Pulverbettbereiche 9a-c sich annähernd vollständig überlappen. Wie in Fig. 1 strichpunktiert angedeutet ist, kann im gezeigten Beispiel von den drei Laserstrahlen 3a-c die Fläche des gesamten Pulverbetts 5, d.h. der gesamte Bearbeitungsbereich oberhalb der Trägerplatte 6, mit jeder der drei Scannereinrichtungen 9a-c abgescannt werden. Die Bestrahlungseinrichtung 7 ist von der Prozesskammer 4 durch ein Fenster getrennt, wie in Fig. 1 gestrichelt angedeutet ist. Eine Steuerungseinrichtung **10** dient der Ansteuerung der Bestrahlungseinrichtung 7 bzw. der drei Scannereinrichtungen 8a-c zur Herstellung des dreidimensionalen Bauteils 2.

Wie in Fig. 1 ebenfalls zu erkennen ist, sind die erste Scannereinrichtung 8a und die zweite Scannereinrichtung 8b in einer gemeinsamen Ebene E angeordnet, die parallel zur Trägerplatte 6 verläuft und die in einem ersten Abstand A1 zu einer Bearbeitungsebene BE der Prozesskammer 4 angeordnet ist. Die gemeinsame Ebene E bildet die XY-Ebene eines XYZ-Koordinatensystems. Die dritte Scannereinrichtung 8c ist gegenüber der gemeinsamen Ebene E versetzt angeordnet. Im gezeigten Beispiel ist die dritte Scannereinrichtung 8c in einem größeren Abstand A2 von der Trägerplatte 6 bzw. von der Bearbeitungsebene BE entfernt angeordnet als die erste und die zweite Scannereinrichtung 8a, 8b. Es versteht sich, dass die erste und die zweite Scannereinrichtung 8a, 8b nicht vollständig in der gemeinsamen Ebene E liegen. Unter der Anordnung in der gemeinsamen Ebene E wird verstanden, dass die beiden Scannereinrichtungen 8a, 8b auf gleicher Höhe über der Bearbeitungsebene BE (d.h. in gleichem Abstand A1 zur Bearbeitungsebene BE) angeordnet sind.

Wie in **Fig. 2** zu erkennen ist, sind die drei Scannereinrichtungen 8a-c in der Projektion in die gemeinsame Ebene E in einem Dreieck angeordnet. Genauer gesagt bilden die drei aus den drei Scannereinrichtungen 8a-c in Richtung auf das Pulverbett 5 austretenden Laserstrahlen 3a-c die drei Eckpunkte eines gleichseitigen Dreiecks. Der erste Laserstrahl 3a und der zweite Laserstrahl 3b treten in die erste Scannereinrichtung 8a bzw. in die zweite Scannereinrichtung 8b parallel ausgerichtet ein. Der dritte Laserstrahl 3c wird der dritten Scannereinrichtung 8c senkrecht zum ersten und zweiten Laserstrahl 3a, 3b ausgerichtet zugeführt.

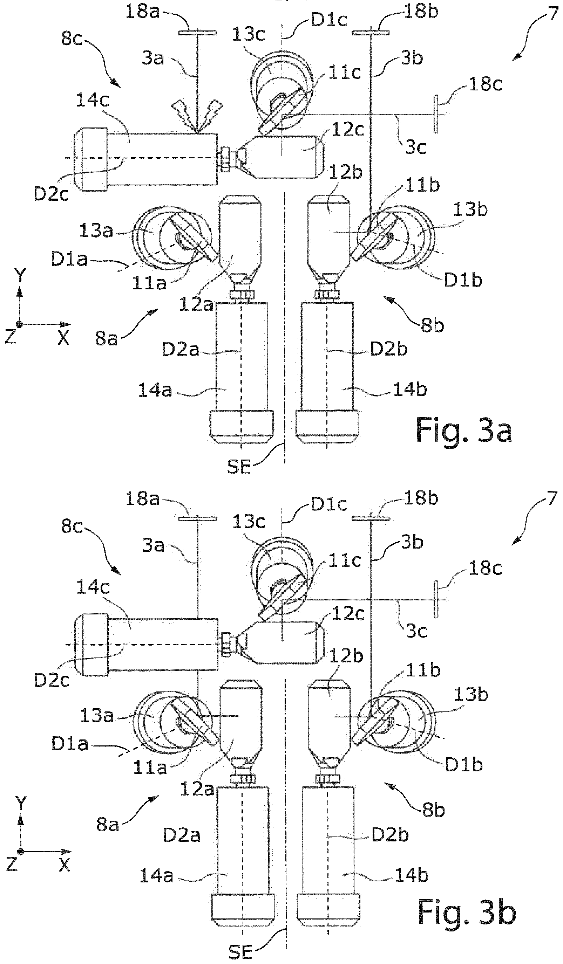

Der Versatz der dritten Scannereinrichtung 8c relativ zu der Ebene E mit der ersten und der zweiten Scannereinrichtung 8a, 8b ermöglicht den in Fig. 2 gezeigten Austritt der drei Laserstrahlen 3a-c an den drei Eckpunkten des gleichseitigen Dreiecks, der bei der Anordnung aller drei Scannereinrichtungen 8a-c in einer gemeinsamen Ebene nicht möglich wäre, wie nachfolgend anhand von Fig. 3a,b erklärt wird.

Wie in Fig. 3a,b gezeigt ist, weist die erste Scannereinrichtung 8a einen im Strahlweg des ersten Laserstrahls 3a ersten Scannerspiegel **11a** und einen im Strahlweg des ersten Laserstrahls 3a zweiten Scannerspiegel **12a** auf. Entsprechend weisen auch die zweite Scannereinrichtung 8b und die dritte Scannereinrichtung 8c jeweils einen ersten Scannerspiegel **11b, 11c** und einen zweiten Scannerspiegel **12b, 12c** auf. Für die Drehung des jeweiligen ersten Scannerspiegels 11a-c weisen die drei Scannereinrichtungen 8a-c jeweils einen ersten Drehantrieb **13a-c** auf, welcher den an dem ersten Drehantrieb 13a-c befestigen ersten Scannerspiegel 11a-c um eine jeweilige erste Drehachse **D1a-D1c** dreht. Entsprechend weisen die drei Scannereinrichtungen 8a-c auch jeweils einen zweiten Drehantrieb **14a-c** auf, um den jeweiligen zweiten Scannerspiegel 12a-c um eine zweite Drehachse **D2a-D2c** zu drehen. Die Drehantriebe 13a-c, 14a-c sind im Wesentlichen zylindrisch ausgebildet, wobei die Zylinderachse mit der jeweiligen Drehachse D1a-D1c, D2a-D2c übereinstimmt.

Bei der in Fig. 3a gezeigten Bestrahlungseinrichtung 7 sind die drei Scannereinrichtungen 8a-c in der in Fig. 1 gezeigten gemeinsamen Ebene E angeordnet, während bei der in Fig. 3b gezeigten Bestrahlungseinrichtung 7 die dritte Scannereinrichtung 8c versetzt zu der gemeinsamen Ebene E angeordnet ist, wie dies in Fig. 1 gezeigt ist. Wie in Fig. 3a zu erkennen ist, schattet bei der Anordnung der drei Scannereinrichtungen 8a-c in der gemeinsamen Ebene E der zweite Drehantrieb 14c des zweiten Scannerspiegels 12c der dritten Scannereinrichtung 8c den ersten Laserstrahl 3a ab, d.h. dieser kollidiert mit dem zweiten Drehantrieb 14c. Bei der in Fig. 3b dargestellten Bestrahlungseinrichtung 7 ist dies nicht der Fall, da die dritte Scannereinrichtung 8c und somit auch der zweite Drehantrieb 14c zu der gemeinsamen Ebene E versetzt angeordnet sind. Bei der in Fig. 3b gezeigten Bestrahlungseinrichtung 7 kollidiert der erste Laserstrahl 3a nicht mit dem zweiten Drehantrieb 14c des zweiten Scannerspiegels 12c der dritten Scannereinrichtung 8c, obwohl dieser in der Projektion in die Bearbeitungsebene BE mit dem ersten Laserstrahl 3a überlappt.

Die besonders kompakte Bauweise der drei Scannereinrichtungen 8a-c wird in Fig. 3b dadurch erreicht, dass die zweite Drehachse D2a des zweiten Scannerspiegels 12a der ersten Scannereinrichtung 8a und die zweite Drehachse D2b des zweiten Scannerspiegels 12b der zweiten Scannereinrichtung 8b parallel zueinander ausgerichtet und benachbart zueinander angeordnet sind. Die beiden ersten Scannerspiegel 11a, 11b der ersten und zweiten Scannereinrichtung 8a, 8b sind hierbei weiter von einer strichpunktiert angedeuteten Spiegelebene SE beabstandet, zu welcher die erste und die zweite Scannereinrichtung 8a, 8b spiegelsymmetrisch angeordnet sind. Um eine möglichst geringe Kantenlänge des gleichseitigen Dreiecks zu erzeugen, an dessen Eckpunkten die drei Laserstrahlen 3a-c aus der Bestrahlungseinrichtung 7 austreten, verläuft die zweite Drehachse D2c des zweiten Scannerspiegels 12c der dritten Scannereinrichtung 8c senkrecht zu den Drehachsen D2a, D2b der zweiten Scannerspiegel 12a, 12b der ersten und der zweiten Scannereinrichtung 8a, 8b.

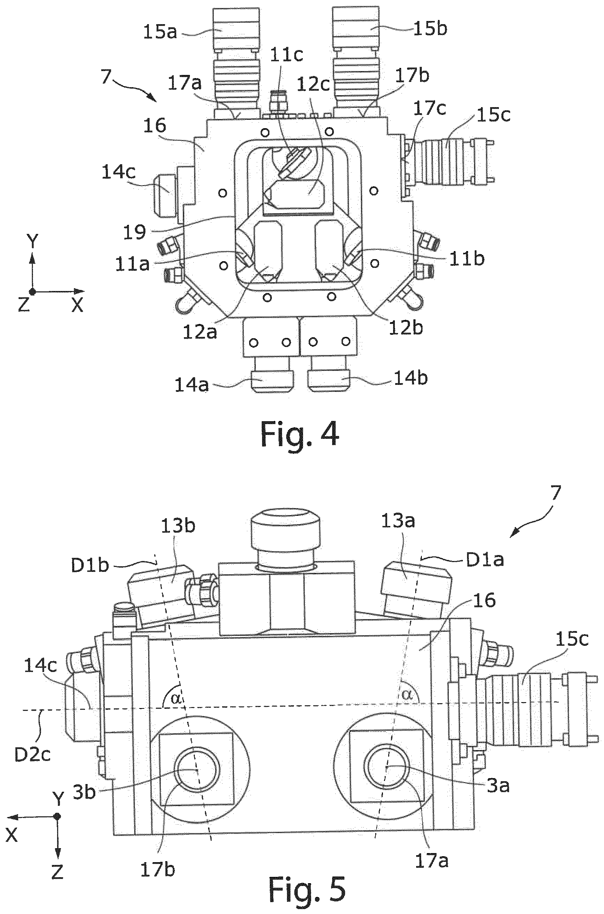

Für die Zuführung des ersten Laserstrahls 3a zu der ersten Scannereinrichtung 8a weist die Bestrahlungseinrichtung 7 eine erste Strahlzuführungseinrichtung **15a** auf, die in **Fig. 4** dargestellt ist. Entsprechend weist die Bestrahlungseinrichtung 7 auch eine zweite Strahlzuführungseinrichtung **15b** zur Zuführung des zweiten Laserstrahls 3b zu der zweiten Scannereinrichtung 8b sowie eine dritte Strahlzuführungseinrichtung **15c** zur Zuführung des dritten Laserstrahls 3c zu der dritten Scannereinrichtung 8c auf. Die drei Strahlzuführungseinrichtungen 15a-c sind röhrenförmig ausgebildet und an einem Gehäuse **16** der Bestrahlungseinrichtung 7 befestigt. An drei Öffnungen **17a-c** in dem Gehäuse 16, die der Anbindung der Strahlzuführungseinrichtungen 15a-c dienen, ist jeweils eine Fokussierlinse **18a-c** angebracht, wie dies auch in Fig. 3a,b angedeutet ist. Die Brennweiten der drei Fokussierlinsen 18a-c zur Fokussierung der drei Laserstrahlen 3a-c in der Bearbeitungsebene BE stimmen überein. Die Abstände der ersten und zweiten Fokussierlinse 18a, 18b zur Bearbeitungsebene BE stimmen überein, während der Abstand der dritten Fokussierlinse 18c zur Bearbeitungsebene BE so angepasst ist, dass dieser die Differenz zwischen dem Arbeitsabstand A2 der dritten Scannereinrichtung 8c zu der Bearbeitungsebene BE und dem Arbeitsabstand A1 der ersten und der zweiten Scannereinrichtung 8a, 8b zu der Bearbeitungsebene BE ausgleicht, so dass alle drei Laserstrahlen 3a-c mit denselben Abbildungsverhältnissen und ungefähr dem gleichen Fokusdurchmesser auf das Pulverbett 5 bzw. auf die Bearbeitungsebene BE fokussiert werden. Wie in Fig. 4 ebenfalls zu erkennen ist, weist das Gehäuse 16 der Bestrahlungseinrichtung 7 eine gemeinsame Austrittsöffnung **19** für alle drei Laserstrahlen 3a-c auf, aus der diese an den Eckpunkten eines gleichseitigen Dreiecks in Richtung auf das Pulverbett 5 aus dem Gehäuse 16 austreten.

Die drei Strahlzuführungseinrichtungen 15a-c sind ausgebildet, den jeweiligen Laserstrahl 3a-c der zugehörigen Scannereinrichtung 8a-c jeweils parallel zur Drehachse D2a-D2c des jeweiligen zweiten Scannerspiegels 8a-c zuzuführen, und zwar von der dem jeweiligen zweiten Drehantrieb 14a-c entgegengesetzten Seite, so dass der jeweilige Laserstrahl 3a-c nicht an einem jeweiligen zweiten Drehantrieb 14a-c entlang propagiert und Kollisionen vermieden werden können. Die jeweilige Strahlzuführungseinrichtung 15a-c führt den zugehörigen Laserstrahl 3a-c von einer von drei nicht bildlich dargestellten Laserquellen, die ebenfalls zu der Bearbeitungsmaschine 1 gehören, zu der jeweiligen Scannereinrichtung 15a-c.

Wie anhand von **Fig. 5** zu erkennen ist, welche die Bestrahlungseinrichtung 7 in einer Seitenansicht zeigt, sind die jeweiligen Drehachsen D1a-c der ersten Scannerspiegel 11a-c nicht senkrecht zu den jeweiligen zweiten Drehachsen D2a-c der zweiten Scannerspiegel 12a-c ausgerichtet, sondern unter einem von 90° abweichenden Winkel a, der im gezeigten Beispiel bei ca. 80° liegt, d.h. geringfügig von 90° abweicht, um den jeweiligen zweiten Scannerspiegel 12a-c aufgrund des steileren Einfallswinkels des jeweiligen Laserstrahls 3a-c etwas kleiner ausgestalten zu können und dadurch dessen Trägheitsmoment zu reduzieren. Die drei ersten Drehachsen D1a-c der drei ersten Scannerspiegel 11a-c verlaufen somit nicht parallel zur Z-Richtung des XYZ-Koordinatensystems.

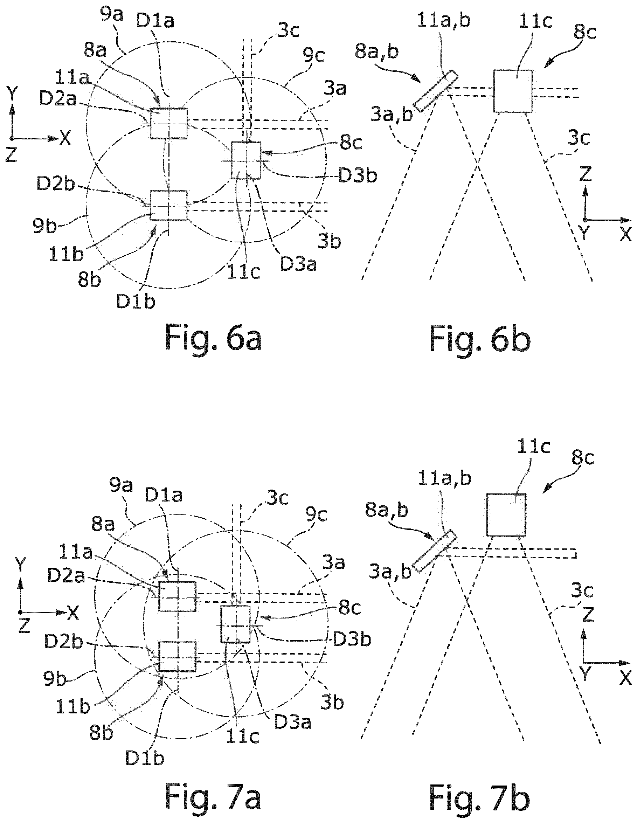

Zusammenfassend lässt sich bei den weiter oben beschriebenen Anordnungen der drei Scannereinrichtungen 8a-c ein hoher Überlapp der bestrahlten Pulverbettbereiche 9a-c erreichen, was eine deutlich flexiblere und schnellere Bestrahlung des Pulverbetts 5 in der Bearbeitungsmaschine 1 zur Herstellung dreidimensionaler Bauteile 2 ermöglicht. Dies gilt auch für den Fall, dass eine jeweilige Scannereinrichtung 8a-c nur einen einzigen (ersten) Scannerspiegel 11a-c aufweist, der mit Hilfe von zwei Drehantrieben um zwei Drehachsen D1a-c, D2a-c gedreht bzw. verkippt werden kann, wie dies nachfolgend anhand von **Fig. 6a**,b und **Fig. 7a**,b erläutert wird.

Zur Vereinfachung der Darstellung sind in Fig. 6a,b und in Fig. 7a,b von den drei Scannereinrichtungen 8a-c jeweils nur die drei Scannerspiegel 11a-c dargestellt, d.h. es wurde auf die Darstellung der Drehantriebe 13a-c, 14a-c zur Drehung eines jeweiligen Scannerspiegels 8a-c um die in diesem Fall zueinander senkrechten Drehachsen D1a-c, D2a-c verzichtet. Die Drehantriebe 13a-c, 14a-c können beispielsweise in ein jeweiliges gemeinsames, plattenförmiges Gehäuse integriert sein, welches seitlich über die drei in Fig. 6a,b bzw. in Fig. 7a,b gezeigten Scannerspiegel 8a-c übersteht. Wie weiter oben beschrieben wurde, treten der erste Laserstrahl 3a und der zweite Laserstrahl 3b in die erste Scannereinrichtung 8a bzw. in die zweite Scannereinrichtung 8b parallel ausgerichtet ein. Der dritte Laserstrahl 3c wird der dritten Scannereinrichtung 8c senkrecht zum ersten und zweiten Laserstrahl 3a, 3b ausgerichtet zugeführt.

Bei der in Fig. 6a,b gezeigten Darstellung sind die drei Scannereinrichtungen 8a-c in der gemeinsamen Ebene E in einem Dreieck angeordnet. Zwar überlappt bei der in Fig. 6a,b dargestellten Anordnung der der ersten Scannereinrichtung 8a zugeführte erste Laserstrahl 3a nicht mit den (nicht bildlich dargestellten) Drehantrieben 13c, 14c bzw. mit dem Gehäuse der dritten Scannereinrichtung 8c, allerdings ist der Abstand der dritten Scannereinrichtung 8c zur ersten und zweiten Scannereinrichtung 8a,b aufgrund des von den jeweiligen Gehäusen bzw. Drehantrieben 13a-c, 14a-c benötigten Bauraums vergleichsweise groß. Auch bei der in Fig. 6a,b dargestellten Anordnung bilden die aus den drei Scannereinrichtungen 8a-c in Richtung auf das Pulverbett 5 austretenden drei Laserstrahlen 3a-c die Eckpunkte eines Dreiecks, das jedoch eine vergleichsweise große Kantenlänge aufweist, so dass die drei in Fig. 6a dargestellten kreisförmigen Pulverbettbereiche 9a-c einen vergleichsweise großen Flächenanteil aufweisen, in dem diese sich nicht auf dem Pulverbett 5 überlappen.

Bei der in Fig. 7a,b dargestellten Anordnung der Scannereinrichtungen 8a-c ist die dritte Scannereinrichtung 8c bzw. der entsprechende Scannerspiegel 11c aus der gemeinsamen Ebene E versetzt angeordnet, so dass die Drehantriebe 13c, 14c bzw. das Gehäuse der dritten Scannereinrichtung 8c nicht nur nicht mit dem dritten Laserstrahl 3 überlappen, sondern auch der Abstand der dritten Scannereinrichtung 8a in X-Richtung zur ersten und zweiten Scannereinrichtung 8a,b reduziert werden kann. Bei der in Fig. 7a gezeigten Darstellung überlappt die dritte Scannereinrichtung 8a in der Projektion in die Bearbeitungsebene BE mit dem dritten Laserstrahl 3c. Bei der in Fig. 7a,b gezeigten Anordnung ist die Kantenlänge des Dreiecks, dessen Eckpunkte die drei in Richtung auf das Pulverbett 5 aus den drei Scannereinrichtungen 8a-c austretenden Laserstrahlen 3a-c bilden, geringer als bei der in Fig. 6a,b gezeigten Anordnung. Wie anhand eines Vergleichs zwischen Fig. 6a und Fig. 7a zu erkennen ist, kann auf diese Weise die Überlappung der drei Pulverbettbereiche 9a-c auch bei Scannereinrichtungen 8a-c erhöht werden, die nur einen einzigen Scannerspiegel 11a-c aufweisen.

## Patentansprüche

1. Bearbeitungsmaschine (1) zum schichtweisen Herstellen von dreidimensionalen Bauteilen (2) durch Bestrahlen eines Pulverbetts (5), umfassend:
eine Prozesskammer (4) mit einer Trägerplatte (6) zur Aufbringung des Pulverbetts (5),
eine Bestrahlungseinrichtung (7), die mindestens drei Scannereinrichtungen (8a-c) aufweist, die jeweils zur zweidimensionalen Ablenkung eines Laserstrahls (3a-c) auf einen von drei sich überlappenden Pulverbettbereichen (9a-c) des Pulverbetts (5) ausgebildet sind,
wobei die erste und bevorzugt die zweite Scannereinrichtung (8a, 8b) in einem ersten Abstand (A1) zu einer Bearbeitungsebene (BE) der Bearbeitungsmaschine (1) angeordnet ist/sind, wobei die dritte Scannereinrichtung (8c) in einem zweiten, vom ersten verschiedenen Abstand (A2) zu der Bearbeitungsebene (BE) angeordnet ist, wobei die drei Scannereinrichtungen (8a-c) zur zweidimensionalen Ablenkung der drei Laserstrahlen (3a-c) jeweils einen ersten Scannerspiegel (11a-c) mit einem ersten Drehantrieb (13a-c) zur Drehung des ersten Scannerspiegels (11a-c) um eine erste Drehachse (D1a-c) und einen zweiten Drehantrieb (14a-c) zur Drehung eines zweiten Scannerspiegels (12a-c) um eine zweite Drehachse (D2a-c) aufweisen, wobei die Drehachse (D2a) des zweiten Scannerspiegels (12a) der ersten Scannereinrichtung (8a) und die Drehachse (D2b) des zweiten Scannerspiegels (12b) der zweiten Scannereinrichtung (8b) parallel zueinander ausgerichtet sind, und wobei die Drehachse (D2c) des zweiten Scannerspiegels (12c) der dritten Scannereinrichtung (8c) senkrecht zu den Drehachsen (D2a, D2b) der zweiten Scannerspiegel (12a, 12b) der ersten und der zweiten Scannereinrichtung (8a, 8b) ausgerichtet ist.

2. Bearbeitungsmaschine nach Anspruch 1, bei welcher der der ersten Scannereinrichtung (8a) zugeführte erste Laserstrahl (3a) oder der der zweiten Scannereinrichtung (8b) zugeführte zweite Laserstrahl (3b) und mindestens einer der beiden Drehantriebe (14c) der dritten Scannereinrichtung (3c) sich in einer Projektion in die Bearbeitungsebene (BE) überlappen.

3. Bearbeitungsmaschine nach einem der Ansprüche 1 oder 2, bei welcher die Bestrahlungseinrichtung (7) eine erste Strahlzuführungseinrichtung (15a) zur Zuführung des ersten Laserstrahls (3a) zu der ersten Scannereinrichtung (8a) und eine zweite Strahlzuführungseinrichtung (15b) zur Zuführung des zweiten Laserstrahls (3b) zu der zweiten Scannereinrichtung (8b) aufweist, die bevorzugt ausgebildet sind, der ersten und zweiten Scannereinrichtung (8a, 8b) den ersten und den zweiten Laserstrahl (3a, 3b) parallel ausgerichtet zuzuführen.

4. Bearbeitungsmaschine nach einem der vorhergehenden Ansprüche, bei welcher die Bestrahlungseinrichtung (7) eine dritte Strahlzuführungseinrichtung (15c) zur Zuführung des dritten Laserstrahls (3c) zu der dritten Scannereinrichtung (8c) aufweist, die bevorzugt ausgebildet ist, der dritten Scannereinrichtung (8c) den dritten Laserstrahl (3c) senkrecht zum ersten und zweiten Laserstrahl (3a, 3b) ausgerichtet zuzuführen.

5. Bearbeitungsmaschine nach einem der Ansprüche 3 oder 4, bei der die erste und die zweite Strahlzuführungseinrichtung (15a, 15b) eine erste Fokussiereinrichtung (17a) und eine zweite Fokussiereinrichtung (17b) und die dritte Strahlzuführungseinrichtung (15c) eine dritte Fokussiereinrichtung (17c) zur Fokussierung eines jeweiligen Laserstrahls (3a-c) in die Bearbeitungsebene (BE) aufweisen.

6. Bearbeitungsmaschine nach einem der vorhergehenden Ansprüche, bei welcher die Bestrahlungseinrichtung (7) ein Gehäuse (16) umfasst, welches eine gemeinsame Austrittsöffnung (19) zum Austritt der drei Laserstrahlen (3a-c) der drei Scannereinrichtungen (8a-c) in Richtung auf die Bearbeitungsebene (BE) aufweist.

## Claims

1. Processing machine (1) for the layered production of three-dimensional components (2) by irradiating a powder bed (5), comprising:
a process chamber (4) having a carrier plate (6) for applying the powder bed (5),
an irradiation device (7) that has at least three scanner devices (8a-c) which are each designed to two-dimensionally deflect a laser beam (3a-c) onto one of three overlapping powder bed regions (9a-c) of the powder bed (5),
wherein the first and preferably the second scanner device (8a, 8b) are arranged at a first distance (A1) from a processing plane (BE) of the processing machine (1), wherein the third scanner device (8c) is arranged at a second distance from the processing plane (BE), which second distance is different from the first distance (A2), wherein the three scanner devices (8a-c) for two-dimensionally deflecting the three laser beams (3a-c) each comprise a first scanner mirror (11a-c) having a first rotary drive (13a-c) for rotating the first scanner mirror (11a-c) about a first axis of rotation (D1a-c) and a second rotary drive (14a-c) for rotating a second scanner mirror (12a-c) about a second axis of rotation (D2a-c), wherein the axis of rotation (D2a) of the second scanner mirror (12a) of the first scanner device (8a) and the axis of rotation (D2b) of the second scanner mirror (12b) of the second scanner device (8b) are aligned in parallel with one another, and wherein the axis of rotation (D2c) of the second scanner mirror (12c) of the third scanner device (8c) is aligned perpendicularly to the axes of rotation (D2a, D2b) of the second scanner mirror (12a, 12b) of the first and the second scanner devices (8a, 8b).

2. Processing machine according to claim 1, wherein the first laser beam (3a) supplied to the first scanner device (8a) or the second laser beam (3b) supplied to the second scanner device (8b) and at least one of the two rotary drives (14c) of the third scanner device (3c) overlap in a projection into the processing plane (BE).

3. Processing machine according to either claim 1 or claim 2, wherein the irradiation device (7) has a first beam supply device (15a) for supplying the first laser beam (3a) to the first scanner device (8a) and a second beam supply device (15b) for supplying the second laser beam (3b) to the second scanner device (8b), which beam supply devices are preferably designed to supply the first and second laser beams (3a, 3b) to the first and second scanner devices (8a, 8b) such that they are aligned in parallel with one another.

4. Processing machine according to any one of the preceding claims, wherein the irradiation device (7) has a third beam supply device (15c) for supplying the third laser beam (3c) to the third scanner device (8c), which beam supply device is preferably designed to supply the third laser beam (3c) to third scanner device (8c) such that it is aligned perpendicularly to the first and second laser beams (3a, 3b).

5. Processing machine according to either claim 3 or claim 4, wherein the first and second beam supply devices (15a, 15b) have a first focusing device (17a) and a second focusing device (17b) and the third beam supply device (15c) has a third focusing device (17c) for focusing a respective laser beam (3a-c) into the processing plane (BE).

6. Processing machine according to any one of the preceding claims, wherein the irradiation device (7) comprises a housing (16) which has a common exit opening (19) for exit of the three laser beams (3a-c) of the three scanner devices (8a-c) in the direction of the processing plane (BE).

## Revendications

1. Machine de façonnage (1) dévolue à la production, par couches, de pièces structurelles tridimensionnelles (2) en exposant un lit de poudre (5) à des rayonnements, comprenant :
une chambre de traitement (4) munie d'une platine de support (6) affectée au dépôt du lit de poudre (5),
un dispositif d'irradiation (7) équipé d'au moins trois dispositifs (8a-c) de balayage exploratoire conçus, respectivement, en vue de la déviation bidimensionnelle d'un faisceau laser (3a-c) vers l'une de trois régions (9a-c) se chevauchant dans ledit lit de poudre (5),
sachant que le premier et, de préférence, le deuxième dispositif (8a, 8b) de balayage exploratoire est (sont) placé(s) à une première distance (A1) d'un plan de façonnage (BE) de ladite machine de façonnage (1), le troisième dispositif (8c) de balayage exploratoire étant placé, par rapport audit plan de façonnage (BE), à une seconde distance (A2) différant de ladite première distance, les trois dispositifs (8a-c) de balayage exploratoire comportant à chaque fois, en vue de la déviation bidimensionnelle des trois faisceaux laser (3a-c), un premier miroir (11a-c) de balayage exploratoire pourvu d'un premier entraînement en rotation (13a-c) destiné à faire tourner ledit premier miroir (11a-c) de balayage exploratoire autour d'un premier axe de rotation (D1a-c), et d'un second entraînement en rotation (14a-c) destiné à faire tourner un second miroir (12a-c) de balayage exploratoire autour d'un second axe de rotation (D2a-c), l'axe de rotation (D2a) du second miroir (12a) de balayage exploratoire du premier dispositif (8a) de balayage exploratoire, et l'axe de rotation (D2b) du second miroir (12b) de balayage exploratoire du deuxième dispositif (8b) de balayage exploratoire, étant orientés parallèlement l'un à l'autre, et l'axe de rotation (D2c) du second miroir (12c) de balayage exploratoire du troisième dispositif (8c) de balayage exploratoire étant orienté perpendiculairement aux axes de rotation (D2a, D2b) du second miroir (12a, 12b) de balayage exploratoire des premier et deuxième dispositifs (8a, 8b) de balayage exploratoire.

2. Machine de façonnage selon la revendication 1, dans laquelle le premier faisceau laser (3a) délivré au premier dispositif (8a) de balayage exploratoire, ou le deuxième faisceau laser (3b) délivré au deuxième dispositif (8b) de balayage exploratoire, et au moins l'un des deux entraînements en rotation (14c) du troisième dispositif (8c) de balayage exploratoire, se chevauchent en projection vers le plan de façonnage (BE).

3. Machine de façonnage selon l'une des revendications 1 ou 2, dans laquelle le dispositif d'irradiation (7) comprend un premier dispositif (15a) de délivrance de faisceau, conçu pour délivrer le premier faisceau laser (3a) au premier dispositif (8a) de balayage exploratoire, et un deuxième dispositif (15b) de délivrance de faisceau, conçu pour délivrer le deuxième faisceau laser (3b) au deuxième dispositif (8b) de balayage exploratoire, qui sont de préférence réalisés pour délivrer, avec orientation parallèle, lesdits premier et deuxième faisceaux laser (3a, 3b) auxdits premier et deuxième dispositifs (8a, 8b) de balayage exploratoire.

4. Machine de façonnage selon l'une des revendications précédentes, dans laquelle le dispositif d'irradiation (7) présente un troisième dispositif (15c) de délivrance de faisceau, conçu pour délivrer le troisième faisceau laser (3c) au troisième dispositif (8c) de balayage exploratoire, qui est de préférence réalisé pour délivrer ledit troisième faisceau laser (3c), audit troisième dispositif (8c) de balayage exploratoire, avec orientation perpendiculaire aux premier et deuxième faisceaux laser (3a, 3b).

5. Machine de façonnage selon l'une des revendications 3 ou 4, dans laquelle les premier et deuxième dispositifs (15a, 15b) de délivrance de faisceaux comprennent un premier dispositif de focalisation (17a) et un deuxième dispositif de focalisation (17b), et le troisième dispositif (15c) de délivrance de faisceau présente un troisième dispositif de focalisation (17c), en vue de focaliser un faisceau laser respectif (3a-c) vers le plan de façonnage (BE).

6. Machine de façonnage selon l'une des revendications précédentes, dans laquelle le dispositif d'irradiation (7) inclut un boîtier (16) muni d'un orifice commun de sortie (19) en vue de la sortie, en direction du plan de façonnage (BE), des trois faisceaux laser (3a-c) des trois dispositifs (8a-c) de balayage exploratoire.
